# EUROPEAN PATENT SPECIFICATION

(11) **EP 4 257 377 B1**
(45) Date of publication and mention of the grant of the patent: **03.12.2025**
(21) Application number: 23166219.8
(22) Date of filing: 31.03.2023
(51) Int. Cl.: B60C 13/00, B29D 30/72, B60C 11/00, B29D 30/06

(54) **PATTERNS FOR ENHANCING CONTRAST OF A TIRE SIDEWALL OR TREAD**
MUSTER ZUR VERBESSERUNG DES KONTRASTS EINER REIFENSEITENWAND ODER -LAUFFLÄCHE
MOTIFS POUR AMÉLIORER LE CONTRASTE D'UN FLANC OU D'UNE BANDE DE ROULEMENT DE PNEU

(30) Priority: 04.04.2022 US 202263327294 P; 24.03.2023 US 202318189340
(43) Date of publication of application: 11.10.2023
(73) Proprietor: The Goodyear Tire & Rubber Company, Akron, OH 44316 (US)
(72) Inventor: FONTAINE, Sebastien Willy, L-9188 Vichten (LU); WINDESHAUSEN, Michel Jean Yves, 6780 Messancy (BE); EL-SEBALY, Wendy, B-4780 Rodt (BE); BYLDA, Vincent, D-54308 Langsur (BE)
(74) Representative: Kutsch, Bernd

(56) References cited:
- EP-A1- 2 781 376
- EP-A1- 3 409 511
- EP-A1- 4 140 778
- WO-A1-2021/261553
- JP-A- 2013 071 670
- JP-A- 2014 136 487

## Description

### Field of the Invention

The present invention relates to a tire that has an outer surface such as a sidewall or tread with a relatively high contrast pattern. The tire can be a pneumatic tire or a non-pneumatic tire.

### Background of the Invention

It is known in the art to have a tire with a sidewall surface that includes letters or numbers. Because the tire is typically made of rubber which has a black color, the letters or numbers can be difficult to read. Thus, it is desired to have an improved pattern useful on the tire sidewall or tread surface that enhances the visibility of the sidewall, particularly letters and numbers which are in high contrast to the pattern. It is known to laser engrave the tire molds in order to form tufts, wherein a plurality of tufts may be used to form the high contrast pattern. However, the tips of these tufts may break during demolding.

Overall, it is desired to have an improved high contrast pattern at a tire surface that can be easily and reliably manufactured at relatively low cost.

If the pattern is to be transferred to the tire surface during the molding of the tire, the pattern should not require significant additional maintenance, cleaning or replacement cost at mold level but nevertheless lead to high contrast patterns at tire level.

EP 3 409 511 A1 and JP 2013 71670 A describe a tire having a pattern at its surface for enhancing contrast. The pattern comprises a first set of spaced apart wavy lines oriented in a first direction and a second set of spaced apart wavy lines oriented in the first direction, wherein the first set of wavy lines is out of phase with the second set of wavy lines.

EP 2 781 376 A1 and EP 4 140 778 A1 describe a tire having a pattern at its surface for enhancing contrast. The pattern comprises a plurality of circles, wherein the plurality of circles do not overlap with each other and are tangent to each other.

WO 2021/261553 A1 and JP 2014 136487 A describe a tire having a pattern at its surface for enhancing contrast. The pattern comprises a first set, a second set and a third set of lines that intersect with each other in such a way that they form a plurality of hexagons.

### Summary of the Invention

The invention relates to a tire in accordance with claim 1.

Dependent claims refer to preferred embodiments of the invention.

In a preferred aspect of the invention, a negative of the pattern to be created at the tire surface is engraved or otherwise applied to the surface of a tire mold part such as a mold sidewall plate or a tread mold segment, and then transferred to the green tire surface during the molding and subsequent curing of the green tire so that a positive of the pattern is created there at the surface of the cured tire.

In an alternative approach, the pattern to be created may also be directly applied or engraved (as a positive of the pattern), to the surface of the cured or finished tire.

In a preferred embodiment of the invention, a wavy line from the first set alternates with a wavy line from the second set; and/or a wavy line from the first set is located adjacent with a wavy line from the second set.

In a preferred embodiment of the invention, a wavy line from the first set is located adjacent with and the mirror image of a wavy line from the second set.

In a preferred embodiment of the invention, the pattern further comprises a third set of spaced apart wavy lines oriented in a second direction, the second direction being perpendicular to the first direction or making an angle in the range of from 60 to 90 degrees with the first direction, and, optionally, further comprising a fourth set of spaced apart wavy lines oriented in the second direction.

In a preferred embodiment of the invention, all wavy lines in the first set and in the second set are sinusoidal shaped wavy lines with the same wave length and preferably the same amplitude, the wavy lines in the second set having a phase shift in the range of from 40 to 60 percent, preferably 50 percent, of said wave length with respect to the wavy lines in the first set.

In a preferred embodiment of the invention, all wavy lines in the third set and in the fourth set are sinusoidal shaped wavy lines with the same wave length and preferably the same amplitude, the wavy lines in the fourth set having a phase shift in the range of from 40 to 60 percent, preferably 50 percent, of said wave length with respect to the wavy lines in the third set.

In a preferred embodiment of the invention, the wavy lines from the first set are located adjacent with the wavy lines from the second set in such a way that they form a series of substantially hourglass shapes; and/or the wavy lines from the third set are located adjacent with the wavy lines from the fourth set in such a way that they form a series of substantially hourglass shapes.

In a preferred embodiment of the invention, the wavy lines from the first set are located adjacent with the wavy lines from the second set and wherein the wavy lines from the third set are located adjacent with the wavy lines from the fourth set in such a way that they define in-between a series of substantially hourglass shapes.

In a preferred embodiment of the invention, the series of substantially hourglass shapes is a series of substantially hourglass shapes comprising or consisting of two adjacent substantially hourglass shapes having the same shape and/or size but being rotated with respect to each by an angle of 90 degrees.

In a preferred embodiment of the invention, said hexagons comprise a plurality of faceted lines forming a shape about a center of each hexagon, said shape preferably being substantially the shape of a snowflake or a flower; and/or wherein said hexagons are regular hexagons.

In a preferred embodiment of the invention, the plurality of circles each have a flower shaped structure or design located therein.

In a preferred embodiment of the invention, the pattern comprises, in addition to said plurality of circles that do not overlap with each other and are tangent to each other, further a plurality of circles that overlap with said plurality of non-overlapping circles and/or with each other.

In a preferred embodiment of the invention, said plurality of overlapping circles form or define a plurality of flower shaped structures or designs, wherein each of said plurality of flower shaped structures or designs is located within one of said non-overlapping circles.

In a preferred aspect of the invention, all the lines forming the wavy lines, circles or hexagons in or at the tire surface each have a height, as measured from the bottom of respective surface, in a range of from 0.1 to 1.0 mm such as from 0.25 to 0.6 mm.

In a preferred aspect of the invention, all the lines forming the wavy lines, circles or hexagons in or at the tire surface each have a width or thickness, when viewed on top of the respective pattern, in the range of from 0.1 to 1.0 mm, preferably 0.1 to 0.4 mm.

In a preferred embodiment of the invention, the pattern is at the surface of a sidewall of the tire.

In a preferred embodiment of the invention, the pattern is at the surface of the tread of the tire or at the lateral or radial surface of one or more tread grooves of the tire.

Also disclosed are methods of manufacturing a tire in accordance with claim 1 or one of the dependent claims.

In a first method, the pattern to be created at the tire surface is engraved, preferably laser-engraved, to the surface of a cured or finished tire.

In a second method, a negative of the pattern to be created at the tire surface is engraved, preferably laser-engraved, or otherwise applied to the surface of a tire mold part such as a mold sidewall plate or a tread mold segment, and then transferred to the green tire surface during the molding and subsequent curing of the green tire so that a positive of the pattern is created there at the surface of the cured tire.

### Brief Description of the Drawings

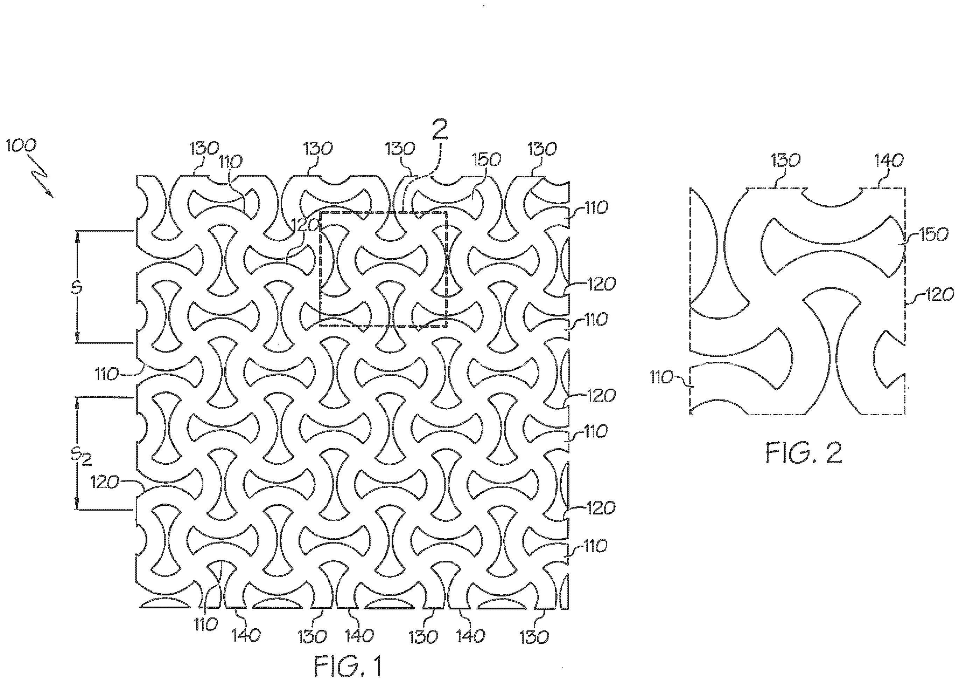

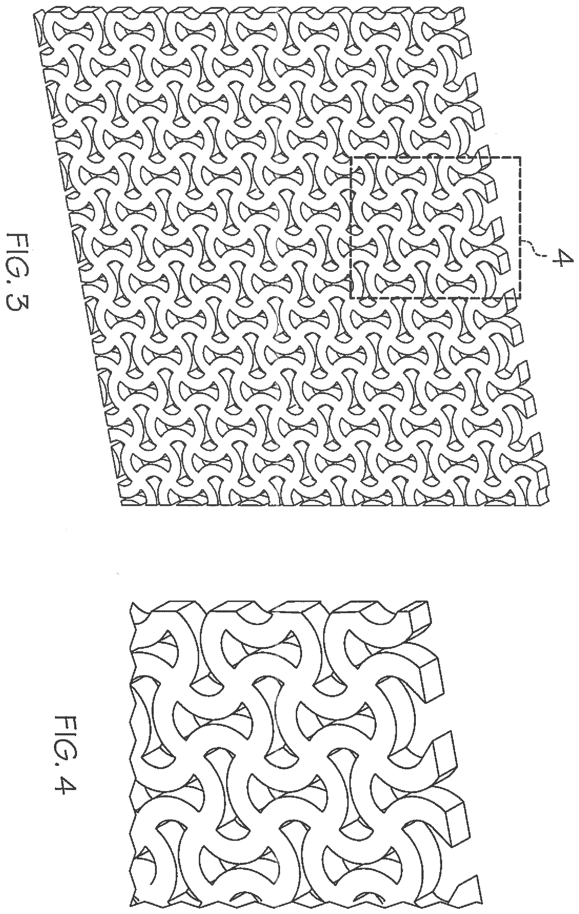

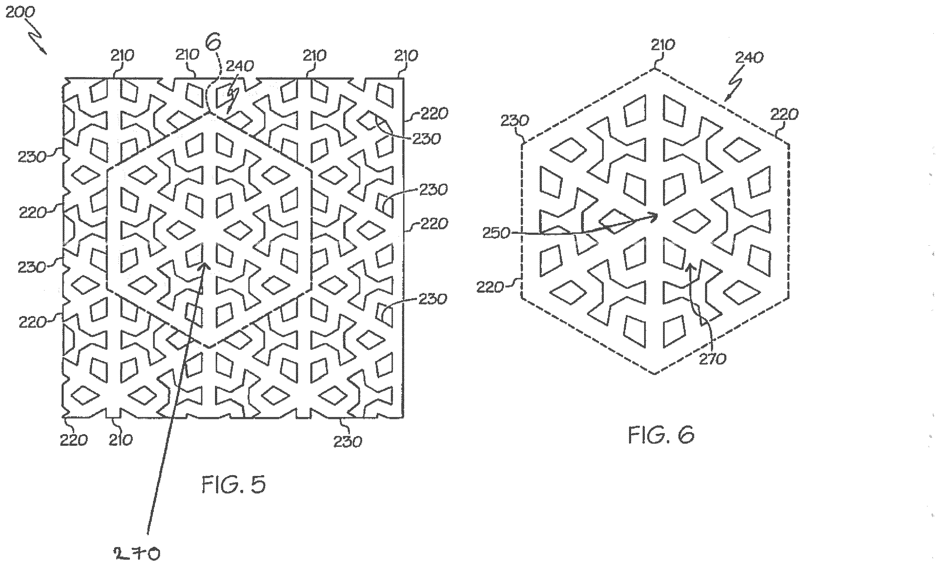

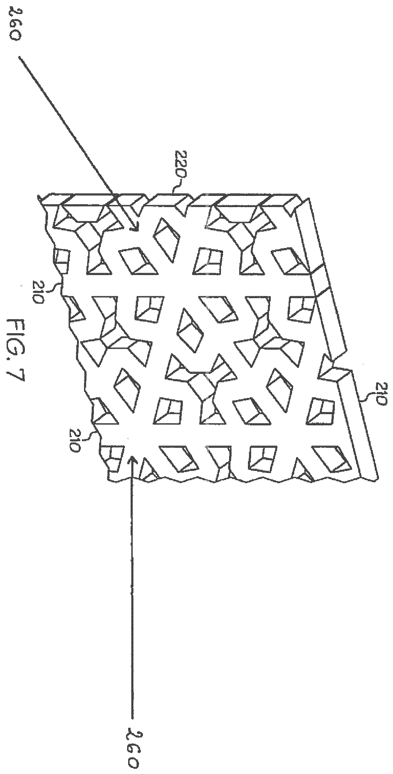

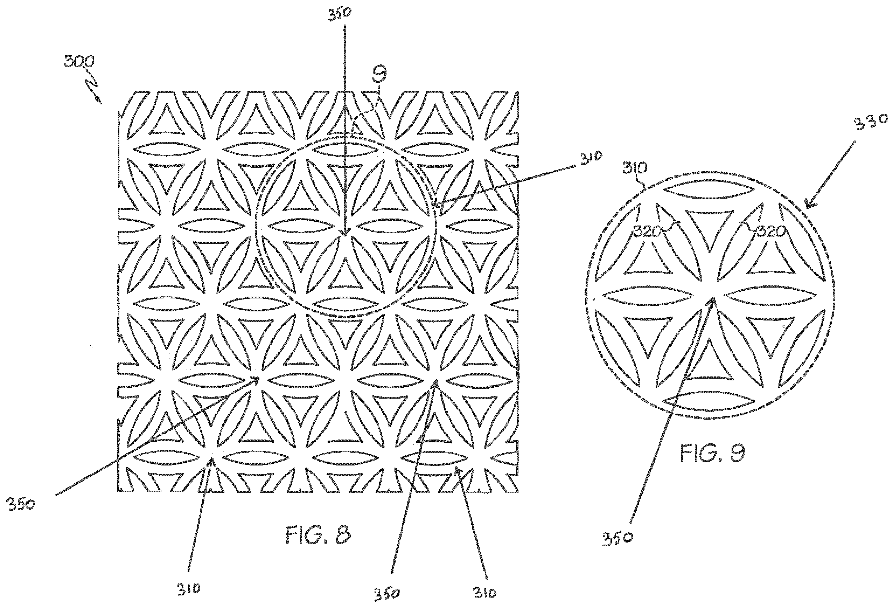

The invention will be described by way of example and with reference to the accompanying drawings in which: FIG. 1 is a first embodiment of a high contrast design; FIG. 2 is a close-up view of the first embodiment of Fig. 1; FIG. 3 is a perspective view of the first embodiment formed in rubber; FIG. 4 is a closeup view of the pattern of Fig. 3; Fig. 5 is a second embodiment of a high contrast design; Fig. 6 is a close-up view of the second embodiment of Fig. 5; Fig. 7 is a perspective view of the second embodiment formed in rubber; Fig. 8 is a third embodiment of a high contrast design; Fig. 9 is a closeup view of the third embodiment of Fig. 8; and Fig. 10 is a closeup view of the third embodiment of a high contrast design formed in rubber.

### Detailed Description of Preferred Embodiments of the Invention

Figure 1 illustrates a first embodiment of a high contrast pattern 100 useful on the sidewall of the tire or on the tread pattern. The high contrast pattern 100 includes a first set of wavy lines 110 that are parallel and are spaced apart a distance S, where S is in the range of from 0.1 mm to 2 mm, and more preferably in the range of from 0.3 mm to 1.5 mm such as from 0.4 to 1.0 mm. The high contrast pattern 100 includes a second set of wavy lines 120 that are parallel and spaced apart a distance S2, wherein S2 is in the range of 0.1 mm to 2 mm, and more preferably in the range of 0.3 mm to 1.5 mm such as from 0.4 to 1.0 mm.

The first and second set of wavy lines are out of phase of each other and may be preferably parallel or may not be parallel.

Both the first and second set of wavy lines are oriented in a first or same direction. A neighboring wavy line of the first set is located in close proximity of less than 1 mm, more preferably less than 0.5 mm to an adjacent wavy line of the second set. Preferably, the lines do not intersect.

Preferably, the second set of wavy lines is the mirror image of the first set of wavy lines, and when viewed together give an hourglass shape.

The first embodiment 100 of a high contrast pattern further includes a third and fourth set of wavy lines 130, 140, respectively. The third and fourth set of wavy lines are oriented in a second direction, preferably perpendicular to the first direction. The third set of wavy lines 130 alternate with the fourth set of wavy lines. The third set of wavy lines is out of phase with the fourth set of wavy lines. A neighboring wavy line of the third set is located in close proximity of less than 1 mm, more preferably less than 0.5 mm to an adjacent wavy line of the fourth set, and wherein the lines do preferably not intersect.

Preferably, the third set of wavy lines is the mirror image of the fourth set of wavy lines, and when the adjacent wavy line of the third set is located adjacent the neighboring wavy line of the fourth set, a plurality of hourglass shapes 150 are formed.

The high contrast wavy pattern may be formed in the tire mold in the sidewall or tread area, resulting in the high contrast pattern 100 projecting from the surface of the tire, as shown in Figures 3 and 4. The wavy lines 110,120, 130,140 may be laser engraved in the mold, and preferably have a thickness in the range of 0.1 to 0.4 mm. The height of the wavy lines preferably is in the range of 0.1 to 1 mm. The wavy lines taken together form a high contrast grid pattern, with nonparallel lines grouped together to form an aesthetically pleasing pattern.

Figures 5-7 illustrate a second embodiment of a high contrast pattern useful for on the tire sidewall or outer tread surface. The high contrast design pattern 200 includes a plurality of spaced apart parallel lines 210 that extend in a first direction. The spacing of the parallel lines are 1 mm or more, preferably 2 mm or more. The high contrast design pattern 200 includes a second set of spaced apart parallel lines 220 that extend in a second direction different than the first direction. The second set of lines 220 intersect with the first set of parallel lines 210 and preferably forms an angle of 60 degrees. A third set of parallel lines 230 intersects both with the first set of parallel lines 210 and the second set of parallel lines 220, forming a hexagon shape 240 formed of preferably six isocles triangles. At the intersection 250 of the first, second and third set of lines, a snowflake 260 is formed of a plurality of faceted lines arranged in a ring 270 to give the appearance of a snowflake 260. Thus, a plurality of snowflakes 270 are formed at each intersection of the first, second and third set of lines. Figure 7 illustrates the grid design of the plurality of snowflakes 260 formed in rubber.

Figure 8 illustrates a third embodiment of a high contrast design 300 formed of a plurality of circles. A first set of circles 310 are formed that have centers aligned in parallel rows, with their edges tangent to circles in an adjacent row, yet which do not overlap. A plurality of circles 320 are overlapped with each other to form the interior flower shape 330 which is surrounded by a first circle 310. The interior flower shape 330 is formed from the curves of the overlapping circles. Fig. 10 illustrates the design in rubber, and preferably has a height of at least 0.3 mm and each circle having a diameter of 1 mm or more, preferably 1.3 mm or more, more preferably 3 to 10 mm. Each circle as described in this embodiment preferably has the same diameter.

## Claims

1. A tire having a pattern (100, 200, 300) at its surface for enhancing contrast, the pattern (100, 200, 300) comprising:
(i) a first set of spaced apart wavy lines (110) oriented in a first direction, a second set of spaced apart wavy lines (120) oriented in the first direction, wherein the first set of wavy lines (110) is out of phase with the second set of wavy lines (120), a third set of spaced apart wavy lines (130) oriented in a second direction, the second direction being perpendicular to the first direction or making an angle in the range of from 60 to 90 degrees with the first direction, and a fourth set of spaced apart wavy lines (140) oriented in the second direction, wherein all wavy lines (130, 140) in the third set and in the fourth set are sinusoidal shaped wavy lines with the same wave length, the wavy lines (140) in the fourth set having a phase shift in the range of from 40 to 60 percent of said wave length with respect to the wavy lines (130) in the third set; or
(ii) a plurality of circles (310), wherein the plurality of circles (310) do not overlap with each other and are tangent to each other, and wherein the plurality of circles (310) each have a flower shaped structure or design (330) located therein; or
(iii) a first set, a second set and a third set of lines (210, 220, 230) that intersect with each other in such a way that they form a plurality of hexagons (240), wherein said hexagons (240) comprise a plurality of faceted lines forming a shape about a center of each hexagon (240), said shape being the shape of a snowflake or a flower, and wherein said hexagons (240) are regular hexagons.

2. The tire of claim 1 wherein a wavy line (110) from the first set alternates with a wavy line (120) from the second set; and/or wherein a wavy line (110) from the first set is located adjacent with a wavy line (120) from the second set.

3. The tire of claim 1 or 2 wherein a wavy line (110) from the first set is located adjacent with and the mirror image of a wavy line (120) from the second set.

4. The tire of at least one of the previous claims wherein all wavy lines (110, 120) in the first set and in the second set are sinusoidal shaped wavy lines with the same wave length and preferably the same amplitude, the wavy lines (110) in the second set having a phase shift in the range of from 40 to 60 percent, preferably 50 percent, of said wave length with respect to the wavy lines (120) in the first set.

5. The tire of at least one of the previous claims wherein all wavy lines (130, 140) in the third set and in the fourth set are sinusoidal shaped wavy lines with the same amplitude.

6. The tire of at least one of the previous claims wherein the wavy lines (110) from the first set are located adjacent with the wavy lines (120) from the second set in such a way that they form a series of substantially hourglass shapes (150); and/or wherein the wavy lines (130) from the third set are located adjacent with the wavy lines (140) from the fourth set in such a way that they form a series of substantially hourglass shapes (150).

7. The tire of at least one of the previous claims wherein the wavy lines (110) from the first set are located adjacent with the wavy lines (120) from the second set and wherein the wavy lines (130) from the third set are located adjacent with the wavy lines (140) from the fourth set in such a way that they define in-between a series of substantially hourglass shapes (150).

8. The tire of claim 6 or 7 wherein the series of substantially hourglass shapes (150) is a series of substantially hourglass shapes (150) comprising or consisting of two adjacent substantially hourglass shapes (150) having the same shape and/or size but being rotated with respect to each by an angle of 90 degrees.

9. The tire of claim 1 wherein the pattern (300) comprises, in addition to said plurality of circles (310) that do not overlap with each other and are tangent to each other, further a plurality of circles that overlap with said plurality of non-overlapping circles and/or with each other.

10. The tire of claim 9 wherein said plurality of overlapping circles form or define a plurality of flower shaped structures or designs (330), wherein each of said plurality of flower shaped structures or designs (330) is located within one of said non-overlapping circles (310).

11. The tire of at least one of the previous claims wherein the pattern (100, 200, 300) is at the surface of a sidewall of the tire.

12. The tire of at least one of the previous claims wherein the pattern (100, 200, 300) is at the surface of the tread of the tire or at the lateral or radial surface of one or more tread grooves of the tire.

## Patentansprüche

1. Reifen, der ein Profil der Lauffläche (100, 200, 300) auf seiner Oberfläche aufweist, um den Kontrast zu erhöhen, wobei das Profil der Lauffläche (100, 200, 300) Folgendes umfasst:
(i) einen ersten Satz voneinander beabstandeten Wellenlinien (110), die in einer ersten Richtung ausgerichtet sind, einen zweiten Satz voneinander beabstandeten Wellenlinien (120), die in der ersten Richtung ausgerichtet sind, wobei der erste Satz von voneinander beabstandeten Wellenlinien (110) gegenüber dem zweiten Satz von voneinander beabstandeten Wellenlinien (120) phasenverschoben ist, einen dritten Satz von voneinander beabstandeten Wellenlinien (130), die in einer zweiten Richtung ausgerichtet sind, wobei die zweite Richtung senkrecht zu der ersten Richtung ist oder einen Winkel bildet, der in dem Bereich von 60 bis 90 Grad zu der ersten Richtung liegt, und einen vierten Satz von voneinander beabstandeten Wellenlinien (140), die in einer zweiten Richtung ausgerichtet sind, wobei alle Wellenlinien (130, 140) in dem dritten Satz und in dem vierten Satz Wellenlinien darstellen, die eine sinusförmige Form mit derselben Wellenlänge aufweisen, wobei die Wellenlinien (140) in dem vierten Satz eine Phasenverschiebung aufweisen, die in dem Bereich von 40 bis 60 Prozent der oben genannten Wellenlänge in Bezug auf die Wellenlinien (130) in dem dritten Satz liegt; oder
(ii) eine Anzahl von Kreisen (310); wobei die mehreren Kreise (310) sich nicht überlappen und angrenzend zueinanderstehen; und wobei ein Muster oder eine Struktur, die eine blumenförmige Konfiguration (330) aufweist, in jeden der mehreren Kreise (310) eingefügt ist; oder
(iii) einen ersten Satz, einen zweiten Satz und einen dritten Satz von Linien (210, 220, 230), die sich gegenseitig schneiden, derart, dass sie eine Anzahl von Sechsecken (240) bilden; wobei die oben genannten Sechsecke (240) eine Anzahl facettierter Linien umfassen, die eine Form um ein Zentrum jedes Sechsecks (240) bilden, wobei die oben genannte Form die Form einer Schneeflocke oder einer Blume annimmt; und wobei die oben genannten Sechsecke (240) regelmäßige Sechsecke sind.

2. Reifen nach Anspruch 1, wobei eine Wellenlinie (110), die von dem ersten Satz stammt, sich mit einer Wellenlinie (120), die von dem zweiten Satz stammt, abwechselt; und/oder wobei eine Wellenlinie (110), die von dem ersten Satz stammt, angrenzend an eine Wellenlinie (120), die von dem zweiten Satz stammt, angebracht ist.

3. Reifen nach Anspruch 1 oder 2, wobei eine Wellenlinie (110), die von dem ersten Satz stammt, angrenzend an ein Spiegelbild einer Wellenlinie (120) angeordnet ist, die von dem zweiten Satz stammt.

4. Reifen nach mindestens einem der vorhergehenden Ansprüche, wobei alle Wellenlinien (110, 120) in dem ersten Satz und in dem zweiten Satz Wellenlinien darstellen, die eine sinusförmige Form mit gleicher Wellenlänge und vorzugsweise gleicher Amplitude aufweisen; wobei die Wellenlinien (110) in dem zweiten Satz eine Phasenverschiebung aufweisen, die in dem Bereich von 40 bis 60 Prozent, vorzugsweise 50 Prozent, der oben genannten Wellenlänge gegenüber den Wellenlinien (120) in dem ersten Satz liegt.

5. Reifen nach mindestens einem der vorhergehenden Ansprüche, wobei alle Wellenlinien (130, 140) in dem dritten Satz und in dem vierten Satz Wellenlinien darstellen, die eine sinusförmige Form mit derselben Amplitude aufweisen.

6. Reifen nach mindestens einem der vorhergehenden Ansprüche, wobei die Wellenlinien (110), die von dem ersten Satz stammen, angrenzend zu den Wellenlinien (120), die von dem zweiten Satz stammen, derart angeordnet sind, dass sie eine Reihe von im Wesentlichen sanduhrförmigen Formen (150) bilden; und/oder wobei die Wellenlinien (130), die aus dem dritten Satz stammen, angrenzend an die Wellenlinien (140), die aus dem vierten Satz stammen, derart angeordnet sind, dass sie eine Reihe von im Wesentlichen sanduhrförmigen Formen (150) bilden.

7. Reifen nach mindestens einem der vorhergehenden Ansprüche, wobei die Wellenlinien (110), die aus dem ersten Satz stammen, angrenzend an die Wellenlinien (120) angebracht sind, die aus dem zweiten Satz stammen, und wobei die Wellenlinien (130), die aus dem dritten Satz stammen, angrenzend an die Wellenlinien (140) angeordnet sind, die aus dem vierten Satz stammen, derart, dass sie zwischen sich eine Reihe von im Wesentlichen sanduhrförmigen Formen (150) definieren.

8. Reifen nach Anspruch 6 oder 7, wobei die Reihe von im Wesentlichen sanduhrförmigen Konfigurationen (150) eine Reihe von im Wesentlichen sanduhrförmigen Konfigurationen (150) darstellt, die zwei angrenzende, im Wesentlichen sanduhrförmige Konfigurationen (150) umfasst, die die gleiche Form und/oder die gleiche Größe aufweisen, jedoch um 90 Grad zueinander verdreht sind, oder die aus den beiden oben genannten Konfigurationen besteht.

9. Reifen nach Anspruch 1, wobei das Profil der Lauffläche (300) zusätzlich zu den mehreren Kreisen (310), die sich nicht überlappen und angrenzend zueinanderstehen, auch eine Anzahl von Kreisen umfasst, die sich mit den mehreren nicht überlappenden Kreisen und/oder untereinander überlappen.

10. Reifen nach Anspruch 9, wobei die mehreren überlappenden Kreise eine Anzahl von Mustern oder Strukturen bilden oder definieren, die eine blumenförmige Form (330) aufweisen; wobei jedes der Muster oder Strukturen, die eine blumenförmige Form (330) aufweisen, innerhalb der mehreren nicht überlappenden Kreise (310) angebracht ist.

11. Reifen nach mindestens einem der vorhergehenden Ansprüche, wobei das Profil der Lauffläche (100, 200, 300) auf der Oberfläche einer Flanke des Reifens angebracht ist.

12. Reifen nach mindestens einem der vorhergehenden Ansprüche, wobei das Profil der Lauffläche (100, 200, 300) an der Oberfläche der Lauffläche des Reifens oder an der Seiten- oder Radialfläche einer oder mehrerer Nuten des Reifens angebracht ist.

## Revendications

1. Bandage qui possède un dessin de la bande de roulement (100, 200, 300) à sa surface pour augmenter le contraste, dans lequel le dessin de la bande de roulement (100, 200, 300) comprend :
(i) un premier ensemble de lignes ondulées espacées les unes des autres (110) qui sont orientées dans une première direction, un deuxième ensemble de lignes ondulées espacées les unes des autres (120) qui sont orientées dans la première direction, dans lequel le premier ensemble de lignes ondulées espacées les unes des autres (110) est déphasé par rapport au deuxième ensemble de lignes ondulées espacées les unes des autres (120), un troisième ensemble de lignes ondulées espacées les unes des autres (130) qui sont orientées dans une deuxième direction, dans lequel la deuxième direction est perpendiculaire à la première direction ou forme un angle qui se situe dans la plage de 60 à 90 degrés par rapport à la première direction, et un quatrième ensemble de lignes ondulées espacées les unes des autres (140) qui sont orientées dans une deuxième direction, dans lequel toutes les lignes ondulées (130, 140) dans le troisième ensemble et dans le quatrième ensemble représentent des lignes ondulées qui possèdent une configuration de forme sinusoïdale avec la même longueur d'onde, dans lequel les lignes ondulées (140) dans le quatrième ensemble présentent un décalage de phase qui se situe dans la plage de 40 à 60 pour cent de ladite longueur d'onde par rapport aux lignes ondulées (130) dans le troisième ensemble ; ou
(ii) un certain nombre de cercles (310) ; dans lequel lesdits plusieurs cercles (310) ne se chevauchent pas les uns les autres et sont tangents les uns par rapport aux autres ; et dans lequel un motif ou une structure qui possède une configuration en forme de fleur (330) est insérée dans chacun desdits plusieurs cercles (310) ; ou
(iii) un premier ensemble, un deuxième ensemble et un troisième ensemble de lignes (210, 220, 230)qui se coupent les uns les autres, d'une manière telle qu'ils forment un certain nombre d'hexagones (240) ; dans lequel lesdits hexagones (240) comprennent un certain nombre de lignes facettées qui forment une configuration autour d'un centre de chaque hexagone (240), dans lequel ladite configuration prend la forme d'un flocon de neige ou d'une fleur ; et dans lequel lesdits hexagones (240) sont des hexagones réguliers.

2. Bandage selon la revendication 1, dans lequel une ligne ondulée (110) qui est issue du premier ensemble alterne avec une ligne ondulée (120) qui est issue du deuxième ensemble ; et/ou dans lequel une ligne ondulée (110) qui est issue du premier ensemble est disposée en position adjacente à une ligne ondulée (120) qui est issue du deuxième ensemble.

3. Bandage selon la revendication 1 ou 2, dans lequel une ligne ondulée (110) qui est issue du premier ensemble est disposée en position adjacente à une image spéculaire d'une ligne ondulée (120) qui est issue du deuxième ensemble.

4. Bandage selon au moins une des revendications précédentes, dans lequel toutes les lignes ondulées (110, 120) dans le premier ensemble et dans le deuxième ensemble représentent des lignes ondulées qui possèdent une configuration de forme sinusoïdale avec la même longueur d'onde et de préférence la même amplitude ; dans lequel les lignes ondulées (110) dans le deuxième ensemble présentent un décalage de phase qui se situe dans la plage de 40 à 60 pour cent, de préférence de 50 pour cent, de ladite longueur d'onde par rapport aux lignes ondulées (120) dans le premier ensemble.

5. Bandage selon au moins une des revendications précédentes, dans lequel toutes les lignes ondulées (130, 140) dans le troisième ensemble et dans le quatrième ensemble représentent des lignes ondulées qui possèdent une configuration de forme sinusoïdale avec la même amplitude.

6. Bandage selon au moins une des revendications précédentes, dans lequel les lignes ondulées (110) qui sont issues du premier ensemble sont disposées en position adjacente aux lignes ondulées (120) qui sont issues du deuxième ensemble d'une manière telle qu'elles forment une série de configurations essentiellement en forme de sabliers (150) ; et/ou dans lequel les lignes ondulées (130) qui sont issues du troisième ensemble sont disposées en position adjacente aux lignes ondulées (140) qui sont issues du quatrième ensemble d'une manière telle qu'elles forment une série de configurations essentiellement en forme de sabliers (150).

7. Bandage selon au moins une des revendications précédentes, dans lequel les lignes ondulées (110) qui sont issues du premier ensemble sont disposées en position adjacente aux lignes ondulées (120) qui sont issues du deuxième ensemble et dans lequel les lignes ondulées (130) qui sont issues du troisième ensemble sont disposées en position adjacente aux lignes ondulées (140) qui sont issues du quatrième ensemble, d'une manière telle qu'elles définissent entre elles une série de configurations essentiellement en forme de sabliers (150).

8. Bandage selon la revendication 6 ou 7, dans lequel la série de configurations essentiellement en forme de sabliers (150) représente une série de configurations essentiellement en forme de sabliers (150) qui comprend deux configurations adjacentes essentiellement en forme de sabliers (150) qui possèdent la même configuration et/ou la même dimension, mais après avoir effectué une rotation les unes par rapport aux autres en formant un angle de 90 degrés, ou qui est constituée par lesdites deux configurations.

9. Bandage selon la revendication 1, dans lequel le dessin de la bande de roulement (300) comprend, en plus desdits plusieurs cercles (310) qui ne se chevauchent pas les uns les autres et qui sont tangents les uns par rapport aux autres, également un certain nombre de cercles qui se chevauchent avec lesdits plusieurs cercles non chevauchants et/ou les uns par rapport aux autres.

10. Bandage selon la revendication 9, dans lequel lesdits plusieurs cercles qui se chevauchent forment ou définissent un certain nombre de motifs ou de structures qui possèdent une configuration en forme de fleurs (330) ; dans lequel chacun desdits motifs ou structures qui possèdent une configuration en forme de fleurs (330) est situé au sein desdits plusieurs cercles non chevauchants (310).

11. Bandage selon au moins une des revendications précédentes, dans lequel le dessin de la bande de roulement (100, 200, 300) est situé à la surface d'un flanc du bandage.

12. Bandage selon au moins une des revendications précédentes, dans lequel le dessin de la bande de roulement (100, 200, 300) est situé à la surface de la bande de roulement du bandage ou à la surface latérale ou radiale d'une ou plusieurs rainures du bandage.
